# EUROPEAN PATENT APPLICATION

(11) **EP 2 863 616 A1**
(43) Date of publication of application: **22.04.2015**
(21) Application number: 14188927.9
(22) Date of filing: 15.10.2014
(51) Int. Cl.: H04M 1/725

(54) **Emergency call device for vehicles**

(30) Priority: 16.10.2013 IT MI20131717
(71) Applicant: Memmola, Serafino, 21020 Casciago (VA) (IT)
(72) Inventor: Memmola, Serafino, 21020 Casciago (VA) (IT)
(74) Representative: Brasca, Marco

(57) **Abstract**

The present invention relates to an emergency call device for vehicles, comprising: a geolocation system (5); an accelerometer (7); a microphone (8); a transmitter (9); a control unit (13) operatively connected to the geolocation system (5), to the microphone (8), to the accelerometer (7), to the transmitter (9). The control unit (13) is configured for: receiving, from the accelerometer (7), a first signal (s1) indicative of an acceleration sustained by the vehicle (2); interrogating the microphone (8) if the first signal (s1) is compatible with the acceleration sustained by the vehicle (2) during an accident; receiving, from the interrogated microphone (8), a second signal (s2) indicative of a sound; comparing the second signal (s2) with reference parameters (I, f, T) characteristic of the sound generated by the explosion of an airbag (24); sending, by means of the transmitter (9), a distress signal (SOS) if the second signal (s2) corresponds with the sound generated by the explosion of the airbag (24). The distress signal (SOS) contains at least the geographic position of the vehicle (2) received by the geolocation system (5) and at least one identification value (Id) of the vehicle (2) itself.

## Description

The object of the present invention is an emergency call device for vehicles. In particular, the present invention is situated in the field of devices mounted on board vehicles (automobiles but also motor vehicles provided with airbag) and adapted to automatically send an emergency signal to suitable structures upon verifying a road accident, so that the emergency transport means are instantaneously alerted and can reach the place of the accident in the least time possible, reducing the risk of death and/or the severity of the wounds of the involved subjects. The present invention is advantageously situated in the field of the "pan-European in-vehicle emergency call service" (eCall) project which the European Commission started in 2009 and whose actuation is expected to conclude by 2015.

The known document DE102005018234 illustrates an emergency system for vehicles that comprises a microphone, control means adapted to evaluate if the sound detected by the microphone corresponds with that produced by the explosion of an airbag of a vehicle and a transmitter for transmitting an emergency call to an external reception station. The microphone is always on when the vehicle is in operation.

The known document EP2321815 illustrates a method for detecting a pressure wave of a predetermined intensity, like that generated by the explosion of an airbag, which is used for recognizing an accident and activate a notification device so that it sends an emergency communication. The method employs as pressure transducers the loudspeakers of the vehicle audio system or the microphone of a cell phone.

The Applicant first of all observed that the devices of known type that detect the explosion of the airbag, as signal indicating the accident verification, make use of other electronic devices such as the cell phone or vehicle audio system that must be present and activated when the means is in operation in order for such explosion to be detected.

The Applicant also observed that, in such known devices, the accuracy of the parameters that characterize the typical sound of the airbag explosion (the only signal that indicates the accident verification) must be high and the algorithms that execute the comparison with the detected sounds must be very precise (and hence complex) in order to prevent other sounds (coming from the external environment and/or from the driver/passenger compartment) from being interpreted as an accident signal and accidentally activate a notification device.

In such scope, the Applicant has perceived the need to improve the known devices, such as those mentioned above, in particular regarding the precision with which they are activated upon verifying the accident, at the same time limiting the complexity of the devices in a manner so as to also render them more reliable and economical.

In particular, the Applicant has found that, by making the explosion of the sound detection dependent on a first signal indicative of an acceleration (positive or negative) sustained by the vehicle, it is possible to recognize the verification of a collision (e.g.: front impact, side impact or rear-ending) with extreme precision, without using systems that are complicated and costly both regarding hardware (complex sensors and CPU with high calculation power) and software (complex algorithms).

More specifically, according to one aspect, the present invention relates to an emergency call device for vehicles, comprising:
a geolocation system; an accelerometer; a microphone; a transmitter; a control unit operatively connected to the geolocation system, to the microphone, to the accelerometer, to the transmitter and configured for:
   receiving, from the accelerometer, a first signal indicative of an acceleration sustained by the vehicle;
   interrogating the microphone if the first signal is compatible with the acceleration sustained by the vehicle during an accident;
   receiving, from the interrogated microphone, a second signal indicative of a sound; comparing the second signal with reference parameters characteristic of the sound generated by the explosion of an airbag;
   sending, by means of the transmitter, a distress signal if said second signal corresponds with the sound generated by the explosion of an airbag; wherein said distress signal contains at least the geographic position of the vehicle received by the geolocation system and at least one identification value of said vehicle.

According to a different aspect, the present invention relates to a method for sending a distress signal from a vehicle, comprising:
detecting an acceleration sustained by the vehicle;
detecting a sound only if the detected acceleration corresponds with the acceleration sustained by the vehicle during an accident;
sending a distress signal only if the detected sound corresponds with the sound generated by the explosion of an airbag of said vehicle;
wherein said distress signal contains at least the geographic position of the vehicle and at least one identification value of said vehicle.

In a preferred embodiment, the microphone is interrogated if the first signal exceeds a predefined threshold.

The Applicant has verified that the solutions in accordance with the present invention ensure the timely sending of the distress signal and prevent the accidental sending thereof, in absence of collision, by means of a simple and reliable system. The system is indeed based on the verification of a plurality of simple conditions (acceleration threshold and sound detected in a limited time interval and provided with a limited number of characteristic reference parameters) and allows preventing having to implement complex algorithms for recognizing the impact only from the sound of the airbag or only from the sustained acceleration. The device and the method according to the invention are applicable to all automobiles but also to motor vehicles provided with airbag (such as for example the Honda Goldwing).

The present invention, in at least one of the aforesaid aspects, can have one or more of the preferred characteristics that are described hereinbelow.

In a third aspect, in accordance with at least one of the two preceding aspects, the geolocation system is of satellite type, e.g. a GPS (Global Positioning System) receiver, Galileo or Glonass. Such systems are active over the entire earth, so that the device according to the invention can be used substantially anywhere.

In a fourth aspect in accordance with one or more of the preceding aspects, the transmitter is of cellular telephone type, for example in accordance with the standards GSM/GPRS and/or UMTS. The system sends the distress signal, such as a phone call and/or a data call. Preferably, the call is carried out to a single emergency number operative over a wide territory. For example, the call is forwarded to the single European emergency number "112", in a manner so as to ensure a single service operative over the entire European territory. Preferably, the transmitter is arranged for housing a SIM (Subscriber Identity Module) card.

In a fifth aspect in accordance with one or more of the preceding aspects, the threshold corresponds with an acceleration (intended as maximum acceleration sustained in absolute value) greater than about 8g, preferably greater than about 10g (where "g" is the gravitational acceleration of 9.81 m/s²). Such values are indicative of the impact due to an accident of such size to normally activate one or more airbags of the vehicle.

In a sixth aspect in accordance with one or more of the preceding aspects, the reference parameters comprise the maximum amplitude (intensity) of the sound generated by the explosion of the airbag.

In a seventh aspect in accordance with the sixth aspect, the distress signal is sent if the maximum amplitude of the sound is comprised between about 100 dB and about 170 dB, preferably comprised between about 150 dB and about 170 dB, more preferably equal to about 160 dB. Usually, for current airbags, the maximum amplitude of the sound generated by the explosion thereof is 160 dB.

In an eighth aspect in accordance with one or more of the preceding aspects, the reference parameters comprise the frequency of the sound generated by the explosion of the airbag.

In a ninth aspect according to one or more of the preceding aspects, the reference parameters comprise the duration of the sound generated by the explosion of the airbag.

In a tenth aspect in accordance with the ninth aspect, the distress signal is sent if the duration of the sound is comprised between about 30 ms and about 120 ms, preferably equal to about 100 ms. Usually, for current airbags, the duration of the sound generated by the explosion thereof is 100 ms.

In an eleventh aspect according to the preceding aspects from the sixth to the tenth, the distress signal is sent if the detected sound falls within in at least one (preferably the amplitude), preferably in at least two (preferably amplitude and duration or amplitude and frequency), more preferably in all (amplitude, frequency and duration), the above-indicated parameters.

In a twelfth aspect in accordance with one or more of the preceding aspects, the microphone is maintained active for an explosion time comprised between about 0.5 s and about 1.5 s, preferably equal to about 1 s. The airbag in fact usually activates within 20 ms after the impact.

In a thirteenth aspect in accordance with one or more of the preceding aspects, the device comprises a box containing at least the geolocation system, the accelerometer, the transmitter and the control unit. Preferably also the microphone is mounted in the box or on the box. The device, object of the invention, is therefore independent from other devices mounted or not mounted on board the vehicle and can be easily installed on or uninstalled from the vehicle itself.

In a fourteenth aspect in accordance with one or more of the preceding aspects, the device is self-powered.

In a fifteenth aspect in accordance with the preceding aspect, the device comprises
a battery, preferably mounted in the box. Preferably, the battery is rechargeable and/or replaceable.

In a sixteenth aspect in accordance with the fourteenth or fifteenth aspect, the device comprises photovoltaic solar panels, preferably mounted on the box.

In a seventeenth aspect in accordance with one or more of the aspects from the thirteenth to the sixteenth, the device comprises means for fixing (e.g. of adhesive type and/or of "hook and loop" type like Velcro^{®}) the box to the vehicle, for example to the dashboard or to the windshield of the vehicle. The mounting position of the device in the vehicle is predefined and previously studied, preferably for each vehicle type/model, in a manner so as to optimize the reception of the sound produced by the airbag.

In an eighteenth aspect in accordance with one or more of the preceding aspects, the device comprises an element of electrical connection, preferably a wiring, with a battery of the vehicle.

In a nineteenth aspect in accordance with one or more of the preceding aspects, the device comprises a connection interface with a control unit of the vehicle. The device can then read vehicle data directly from the control unit and transmit it together with the distress signal. Such data can also be used, not in case of accident, for alerting other structures via telephone in case of damage/failure (road assistance network) and/or programmed service deadlines (garage network) and/or for calculating the insurance policy in relation to the actual use of the vehicle (pay per use). Preferably, the interface comprises a wiring. Preferably, the interface also comprises the electrical connection element.

In a twentieth aspect according to the preceding aspect, the interface is of standard type, preferably OBD (On-Board Diagnostic).

In a twenty-first aspect in accordance with one or more of the preceding aspects, the device comprises a Bluetooth transmitter/receiver (e.g. Bluetooth 4.0). In addition, a further Bluetooth transmitter/receiver is coupled to the control unit of the vehicle, for example through the OBD connector thereof, in order to transmit the data to the device according to the invention in wireless mode.

In a twenty-second aspect in accordance with one or more of the preceding aspects, the device comprises a Wi-Fi transmitter/receiver (e.g. of WLAN IEEE 802.11 type). The Wi-Fi transmitter/receiver has a range up to about 1 km and allows the device according to the invention to dialog with other Wi-Fi devices installed on other vehicles and/or with stations fixed on the road network. The device can then be used for the remote communication between vehicles and for preventing collisions between the same. In addition, a further Wi-Fi transmitter/receiver can be coupled to the control unit of the vehicle, for example through the OBD connector thereof, in order to transmit the data to the device according to the invention in wireless mode.

In a twenty-third aspect according to one of the preceding aspects, the device comprises at least one camera operatively connected to the control unit. Preferably the camera is infrared. Preferably, the device comprises a (flash) light source coupled with the camera.

In a twenty-fourth aspect according to the preceding aspect, the camera frames the internal driver/passenger compartment of the vehicle.

In a twenty-fifth aspect according to the twenty-third and/or twenty-fourth aspect, the camera frames the vehicle exterior.

In a twenty-sixth aspect according to one of the preceding aspects, the device comprises a first camera that frames the driver/passenger compartment and a second camera that frames the outside environment. The second camera can be configured for controlling the distance from the preceding vehicles and assist in the prevention of collisions.

In a twenty-seventh aspect according to one or more of the preceding aspects, the device comprises a manual activator, preferably a button operatively connected to the control unit and preferably mounted on the box, which allows voluntarily activating the device on manual command and sending the distress signal. When the button is pressed, the transmitter sends the distress signal containing at least the geographic position of the vehicle received by the geolocation system and at least one identification value of said vehicle.

In a twenty-eighth aspect according to one or more of the preceding aspects, the identification value of the vehicle comprises one or more parameters of visual identification of the vehicle, for example selected from among: license plate number, model, color, type (car, truck, motorcycle etc.). Such visual information facilitates the task of rescue workers reaching the accident site.

In a twenty-ninth aspect according to one or more of the preceding aspects, the identification value of the vehicle comprises one or more identification codes, such as the chassis number and/or license plate number.

In one aspect according to the twenty-eighth and/or twenty-ninth aspect, the visual identification parameters and/or identification codes are contained in the control unit of the vehicle and transmitted to the device by said control unit.

In one aspect according to the twenty-eighth and/or twenty-ninth aspect, the visual identification parameters and/or identification codes are inserted in the device by means of, preferably by the same user, a personal computer or other electronic device to which the device according to the invention is connectable.

In a thirtieth aspect according to one or more of the preceding aspects, the distress signal contains parameters indicative of the state of the vehicle, preferably transmitted to the device by the control unit of the vehicle, such as the water and oil temperatures, the number of engine revolutions.

In a thirty-first aspect according to one or more of the preceding aspects, the distress signal contains one or more images and/or a video of the driver/passenger compartment, taken by the first camera preferably before and/or during and/or just after the accident, indicative of the number and/or condition and/or behavior of the occupants.

In a thirty-second aspect according to one or more of the preceding aspects, the distress signal contains one or more images and/or a video of the outside, taken by the second camera directed outward preferably before and/or during and/or just after the accident, indicative of the place and dynamics of the accident.

In a thirty-third aspect according to one or more of the preceding aspects, the distress signal contains the time of the event/accident.

Further characteristics and advantages will be clearer from the detailed description of a preferred but not exclusive embodiment, of an emergency call device for vehicles and of a method for sending a distress signal from a vehicle in accordance with the present invention.

Such description will be set forth hereinbelow with reference to the enclosed drawings, provided for only exemplifying and hence non-limiting purposes:
- figure 1 schematically shows an automobile equipped with the device according to the invention associated with a telecommunication infrastructure;
- figure 2 schematically illustrates the device of figure 1 and some parts of the vehicle interacting with said device.

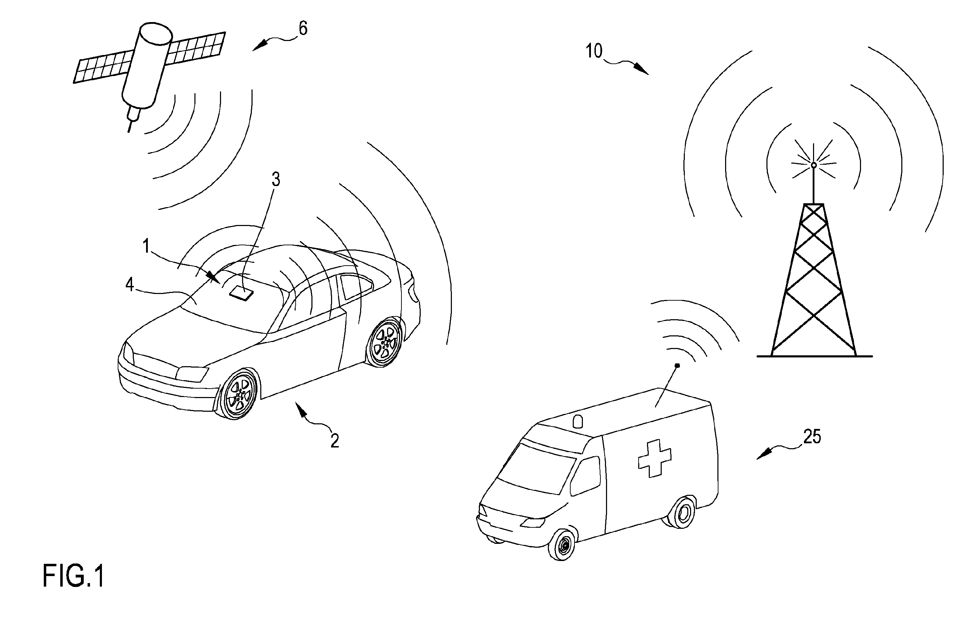

With reference to figure 1, reference number 1 overall schematically indicates a device according to the invention associated with an automobile 2. In the illustrated exemplifying embodiment, all the elements of the device 1 are housed in a box 3 mounted on board the vehicle 2, for example anchored to the windshield 4 with strips of Velcro^{®}.

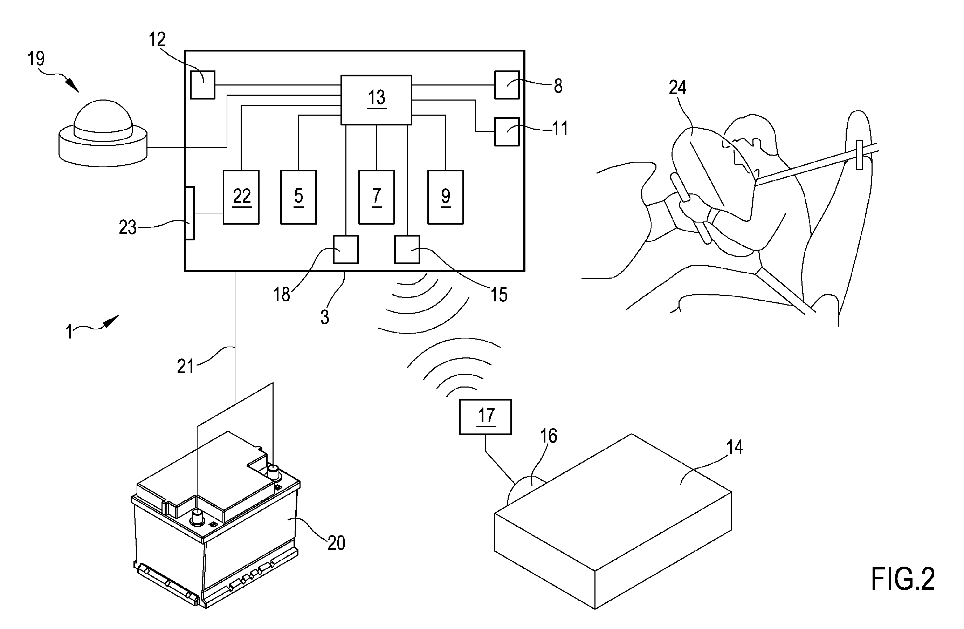

With particular reference to figure 2, the device 1 comprises a GPS receiver 5 (geolocation system), of type *per se* known and not described in detail, adapted to receive radio signals from the satellites 6 of the Global Positioning System network and process said signals in order to obtain the position (geographic coordinates) and the time of the place where the receiver 5 and the device 1 are situated.

The device 1 comprises an accelerometer 7, *per se* known and not described in detail, capable of detecting the acceleration to which it is subjected - and to which the box 3 that houses it and the vehicle 2 on which said box 3 is mounted are subjected.

The device 1 comprises a microphone 8, i.e. a transducer of electro-mechanical type capable of converting the sound pressure waves into electrical signals. The microphone 8 is mounted in or on the box 3 or spaced therefrom and connected, wireless or via cable, and it is positioned in a manner so as to detect sounds that are preferably generated inside the driver/passenger compartment of the vehicle 2.

The device 1 comprises a transmitter 9 of the type for cell phones, e.g. in accordance with the standards GSM/GPRS and/or UMTS, capable of transmitted information through the network 10. The transmitter 9 is preferably but not necessarily a transmitter/receiver equipped with SIM.

The device 1 comprises a first camera 11 directed towards the interior of the driver/passenger compartment and a second camera 12 directed outward for framing the environment through the windshield (or another transparent screen). The cameras are of digital type and are capable of taking photographs and/or shooting videos. The cameras can be infrared in order to make photographs/shoot videos even in the dark and/or they can be equipped with flash.

The device 1 comprises a control unit 13 (CPU) operatively connected to the GPS receiver 5, to the accelerometer 7, to the microphone 8 and to the transmitter 9, to the first and second camera 11, 12 (as schematized in figure 2).

In the illustrated non-limiting embodiment, the device 1 is connected to a control unit 14 belonging to the vehicle 2 for reading data directly from the control unit itself 14. As is visible in figure 2, the device 1 comprises a Bluetooth transmitter/receiver 15 mounted in the box 3 and connected to the control unit 13. An OBD (On-Board Diagnostic) port 16 of the control unit 14 is connected via cable to an auxiliary Bluetooth transmitter/receiver 17 configured for wireless communication with the Bluetooth transmitter/receiver 15 mounted in the box 3. In an embodiment variant, not illustrated, the connection between the device 1 and the control unit 14 of the vehicle 2 occurs by means of wiring, preferably always through the standard OBD interface.

The illustrated device 1 also comprises Wi-Fi transmitter/receiver 18 for example of WLAN IEEE 802.11 type. Such Wi-Fi transmitter/receiver 18 allows the wireless communication with Wi-Fi transmitters/receivers of other devices 1 according to the invention mounted on other vehicles or with devices of different type mounted on vehicles or part of the infrastructure. In a non-illustrated embodiment, the Wi-Fi transmitter/receiver 18 is used in place of the Bluetooth transmitter/receiver 15 for dialoging with the control unit 14 of the vehicle 2. In such case, also the auxiliary transmitter/receiver connected to the OBD port of the control unit 14 is of Wi-Fi type.

Mounted on the box 3 is a button 19 (illustrated separated from the box itself 3 in figure 2 for greater clarity). The button 19 is connected to the control unit 13 in order to perform a function described below.

The device 1 is also power supplied by the battery 20 of the vehicle 2 to which it is connected by means of a wiring 21. In the non-illustrated embodiment that comprises a connection wiring between the device 1 and the control unit 14 of the vehicle 2, the power supply can be integrated in the OBD port.

In an embodiment variant, in place of the power supply deriving from the battery 20 of the vehicle 2 or in addition to this, a battery 22 is present inside the box 3 that makes the device 1 energy-autonomous. The internal battery 22 is replaceable and/or rechargeable by means of operating the vehicle and/or by means of a photovoltaic solar panel 23 mounted on the box 3 or outside the box 3 and connected thereto.

During use and in accordance with the method according to the invention, during the normal operation of the vehicle 2, the microphone 8 of the device 1 is on but not subjected to interrogation while the accelerometer 7 continuously detects the accelerations that the vehicle 2 sustains. The control unit 13 receives a first signal "s₁" from the accelerometer 7; such first signal "s₁" is indicative of such sustained accelerations. In a storage zone of the control unit 13, there are the characteristic parameters of the acceleration sustained by the vehicle 2 in case of accident of a certain size, i.e. such to normally involve the explosion of one or more airbags 24. Such characteristic parameters are, for example, an acceleration curve or more simply an acceleration threshold "aₜ". Such acceleration threshold is for example equal to about 10g.

The control unit 13 compares the first signal "s₁" with the acceleration threshold "aₜ". If the first signal "s₁" is greater than or equal to the acceleration threshold "aₜ", the control unit 13 activates the microphone 8 for a limited explosion time "Δt" of about 1 s.

In a storage zone of the control unit 13, there are the characteristic reference parameters of the sound generated by the explosion of the airbag 24. Such reference parameters are, for example, defined by the time curve or by the frequency analysis of said sound. Such reference parameters are preferably: the maximum amplitude (intensity) "I", the frequency "f" and the duration "T" of the sound generated by the explosion of the airbag 24. The maximum amplitude "I" is comprised between about 100 dB and about 170 dB. The duration "T" is comprised between about 30 ms and about 120 ms.

During the explosion time "Δt", the control unit 13 receives a second signal "s₂" from the microphone 8 indicative of the sound captured thereby.

The control unit 13 compares the second signal "s₂" with the abovementioned reference parameters and, only if said second signal "s₂" falls within each of the above-indicated fields (of frequency, intensity and duration), the control unit 13 recognizes in such sound the explosion of the airbag 24 and commands the transmitter 9 so that it sends a distress signal "SOS" to the network 10 which, through a suitable infrastructure, alerts emergency transport means 25 (ambulances, fire brigade, etc.). In particular, the distress telephone signal is sent to a single emergency number (which in Europe is "112"). The distress signal "SOS" can also be sent to other numbers preset in the device 1.

Such distress signal preferably contains a plurality of data. Said distress signal necessarily contains the geographic position of the vehicle at the time of the accident (such position is supplied by the GPS receiver 5) and at least one identification value "Id" of said vehicle 2 (supplied for example directly by the control unit 14 of the vehicle 2 and/or previously inserted by the user by means of, for example, a PC connectable to the device 1).

The identification value "Id" for example comprises the license plate number and/or the chassis number or another identification code of the vehicle and, preferably, the vehicle type and, preferably, the vehicle model and, preferably, the vehicle color.

The distress signal can also advantageously comprise a photograph or a brief video of what occurs in the driver/passenger compartment (and/or what occurred just before or during the accident) made by the first camera 11 which is always on or which comes to be activated, for example, like the microphone 8, if the first signal "s1" is greater than or equal to the acceleration threshold "aₜ". This allows verifying the condition of the occupants after the accident and/or the behavior thereof before and/or during the accident.

Analogously, the distress signal can also advantageously comprise a photograph or a brief video of what happens outside the vehicle, made by the second camera 12. This allows visually identifying the place of the accident and/or the dynamics thereof.

The distress signal can also advantageously comprise parameters indicative of the state of the vehicle, preferably transmitted by the control unit 14 of the vehicle 2, which can for example supply information regarding the damage sustained by the vehicle.

The distress signal "SOS" can also be voluntarily sent by a passenger by pressing the button 19, for example in the case of illness of one of the passengers, in the absence of an accident, or in case of device 1 malfunctioning.

In addition, the device 1 as described in detail implements other functions that are active during normal vehicle operation. For example, it continuously dialogs, through its Wi-Fi transmitter/receiver 18, with the other vehicles and/or with the infrastructure 10 in order to receive and/or transmit information on the traffic and/or to control the position of the vehicles nearby and prevent accidents (preferably with the assistance of the second camera). The device 1 can also transmit vehicle 2 operation data to a network of garages (for programming the maintenance and/or to inform regarding damage/failure) and/or to the insurance company (to allow the calculation of the insurance policy in relation to the actual use of the vehicle, "pay per use").

## Claims

1. Emergency call device for vehicles, comprising:
a geolocation system (5);
an accelerometer (7);
a microphone (8);
a transmitter (9);
a control unit (13) operatively connected to the geolocation system (5), to the microphone (8), to the accelerometer (7), to the transmitter (9) and configured for:
receiving, from the accelerometer (7), a first signal (s₁) indicative of an acceleration sustained by the vehicle (2);
interrogating the microphone (8) if the first signal (s₁) is compatible with the acceleration sustained by the vehicle (2) during an accident;
receiving, from the interrogated microphone (8), a second signal (s₂) indicative of a sound;
comparing the second signal (s₂) with reference parameters (I, f, T) characteristic of the sound generated by the explosion of an airbag (24);
sending, by means of the transmitter (9), a distress signal (SOS) if said second signal (s₂) corresponds with the sound generated by the explosion of an airbag (24);
wherein said distress signal (SOS) contains at least the geographic position of the vehicle (2) received by the geolocation system (5) and at least one identification value (Id) of said vehicle (2).

2. Device according to claim 1, wherein the microphone (8) is interrogated if the first signal (s₁) exceeds a predefined threshold (aₜ).

3. Device according to claim 2, wherein the predefined threshold corresponds with an acceleration greater than about 8g.

4. Device according to claim 1 or 2 or 3, wherein the reference parameters (I, f, T) comprise the maximum amplitude (I) of the sound generated by the explosion of the airbag (24).

5. Device according to the preceding claim, wherein the distress signal (SOS) is sent if said maximum amplitude (I) of the sound is comprised between about 100 dB and about 170 dB.

6. Device according to one of the preceding claims, wherein the reference parameters (I, f, T) comprise the frequency (f) of the sound generated by the explosion of the airbag (24).

7. Device according to one of the preceding claims, wherein the reference parameters (I, f, T) comprise the duration (T) of the sound generated by the explosion of the airbag (24).

8. Device according to the preceding claim, wherein the distress signal (SOS) is sent if said duration (T) of the sound is comprised between about 30 ms and about 120 ms.

9. Device according to one of the preceding claims, wherein the microphone (8) is maintained under interrogation for a time comprised between about 0.5 s and about 1.5 s.

10. Device according to one of the preceding claims, comprising a box (3) containing at least the geolocation system (5), the accelerometer (7), the microphone (8), the transmitter (9) and the control unit (13).

11. Device according to one of the preceding claims, wherein said device (1) is self-powered and/or comprises an element (21) of electrical connection with a battery (20) of the vehicle (2).

12. Device according to one of the preceding claims, comprising a connection interface (15, 16, 17) with a control unit (14) of the vehicle (2), in order to read vehicle data from the control unit (14) and transmit it together with the distress signal.

13. Device according to one of the preceding claims, comprising a manual activator (19), preferably a button, for the voluntary sending of the distress signal (SOS).

14. Method for sending a distress signal from a vehicle, comprising:
detecting an acceleration sustained by the vehicle (2);
detecting a sound only if the detected acceleration corresponds with the acceleration sustained by the vehicle (2) during an accident;
sending a distress signal (SOS) only if the detected sound corresponds with the sound generated by the explosion of an airbag (24) of said vehicle (2);
wherein said distress signal (SOS) contains at least the geographic position of the vehicle (2) and at least one identification value (Id) of said vehicle (2).

15. Method according to the preceding claim, comprising mounting on a vehicle in a predefined position on the dashboard or on the windshield a device in accordance with one or more of the claims from 1 to 13.
